# EUROPÄISCHE PATENTSCHRIFT

(11) **EP 2 327 126 B1**
(45) Veröffentlichungstag und Bekanntmachung des Hinweises auf die Patenterteilung: **18.03.2020**
(21) Anmeldenummer: 09748693.0
(22) Anmeldetag: 14.09.2009
(51) Int. Cl.: H01R 39/00, H02K 3/28, H02K 13/04

(54) **HERSTELLUNGSVERFAHREN EINES LÄUFERS EINES KOMMUTATORMOTORS, DERARTIG HERGESTELLTER KOMMUTATORMOTOR UND ANTIBLOCKIERBREMSSYSTEM MIT DERARTIGEM MOTOR**
MANUFACTURING METHOD OF A COMMUTATOR MOTOR ROTOR, SUCH A COMMUTATOR MOTOR AND ANTI-LOCK BRAKING SYSTEM COMPRISING SUCH A COMMUTATOR MOTOR
METHODE DE FABRICATION UN ROTOR D'UN MOTEUR COLLECTEUR, UN TEL MOTEUR A COLLECTEUR ET SYSTEM DE FREINAGE ANTI-BLOCAGE COMPRENANT UN TEL MOTEUR

(30) Priorität: 22.09.2008 DE 102008042242
(43) Veröffentlichungstag der Anmeldung: 01.06.2011
(73) Patentinhaber: Brose Fahrzeugteile GmbH & Co. Kommanditgesellschaft, Würzburg, 97076 Würzburg (DE)
(72) Erfinder: KIRCHNER, Heinrich, 97273 Kürnach (DE); HESSDOERFER, Robert, 97753 Karlstadt (DE)
(74) Vertreter: Isarpatent
(86) Internationale Anmeldenummer: PCT/DE2009/001274
(87) Internationale Veröffentlichungsnummer: WO 2010/031381

(56) Entgegenhaltungen:
- EP-A1- 1 489 724
- EP-A2- 1 073 182
- JP-A- 60 062 842
- JP-A- 2002 374 645
- US-B1- 6 218 755

## Beschreibung

Die vorliegende Erfindung betrifft ein Verfahren zum Herstellen eines Ankerläufers mit Kommutator eines Kommutatormotors. Die vorliegende Erfindung betrifft weiterhin einen Kommutatormotor, insbesondere in Gleichstromausführung und eine Antiblockierbremsvorrichtung.

Derartige Kommutatormotoren sind allgemein bekannt und werden beispielsweise in Antriebseinrichtungen von Kraftfahrzeugen, wie zum Beispiel in Verstellantrieben und dergleichen, eingesetzt.

Bei einem der Anmelderin intern bekannten Kommutatormotor mit einer Lamellenzahl von vierundzwanzig ist eine Einzelzahnbewicklung vorgesehen, für welche eine Nadelwicklungsvorrichtung anzuwenden ist, da diese gegenüber einem Flyerwickler geringere Taktzeiten beim Einhängen von Drähten an Lamellenhaken aufweist. Ein Wickelschema sieht dabei Brücken am Kommutator vor. Deshalb muss die Bewicklung in einem Umlauf durchgeführt werden und erfolgt mit einem so genannten Nadelwickler. Als problematisch wird hierbei gesehen, dass durch dieses Wickelschema bei einer Einzeldrahtwicklung drei oder vier Drähte an einen jeweiligen Lamellenhaken anzuschließen sind. Dieser Lammellenhaken ist dadurch bedingt entsprechend groß auszubilden, was den Bauraum des Kommutators und damit des gesamten Kommutatormotors vergrößert.

Die erhöhten Anforderungen an die Einsatzbedingungen in einem Kraftfahrzeug insbesondere in Bezug auf ein möglichst geringes Bauvolumen, niedriges Gewicht, geringe Anzahl der verwendeten Einzelteile und gleichzeitig hohem Wirkungsgrad, resultieren in der stets vorhandenen Forderung, einen entsprechend verbesserten Kommutatormotor bereitzustellen.

Die EP1073182 A2 beschreibt einen Kommutator mit zusätzlichen parallelen Pfaden.

Die EP1489724 A1 beschreibt einen DC Bürstenmotor.

Die US6218755 B1 beschreibt eine elektrische Dynamomaschine.

Die JP2002374645 A beschreibt eine Rotoreinheit eines DC Bürstenmotors und ein Wickelverfahren für dessen Spule

Die JPS6062842 A beschreibt einen weiteren Rotor.

Vor diesem Hintergrund liegt der vorliegenden Erfindung daher die Aufgabe zugrunde, ein verbessertes Verfahren zum Herstellen eines Ankerläufers für einen Kommutatormotor sowie einen verbesserten Kommutatormotor und eine verbesserte Antiblockierbremsvorrichtung anzugeben.

Erfindungsgemäß wird diese Aufgabe durch ein Verfahren mit den Merkmalen des Patentanspruchs 1 und/oder durch einen Kommutatormotor mit den Merkmalen des Patentanspruchs 10 und/oder durch eine Antiblockierbremsvorrichtung mit den Merkmalen des Patentanspruchs 15 gelöst.

Demgemäß ist ein Verfahren zum Herstellen eines Ankerläufers mit Kommutator eines Kommutatormotors, insbesondere in Gleichstromausführung, mit einem Stator, der mehrere Statorpole aufweist, wobei der Ankerläufer mehrere Ankerzähne, die am Umfang des Ankerläufers mit dazwischen liegenden Läufernuten angeordnet sind, und einen Kommutator umfasst, der mehrere Lamellen und zugeordnete Wicklungshaken aufweist, vorgesehen. Das Verfahren weist die folgenden Schritte auf: Wickeln von Brücken auf einer Brückenseite des Kommutators durch Verbinden von Brückenhaken von Lamellen des Kommutators; und Wickeln von Wicklungen von Ankerzähnen und Anschließen der jeweiligen Wicklungsenden an Ankerhaken der Lamellen auf einer Ankerseite des Kommutators.

Ferner ist ein Kommutatormotor, insbesondere in Gleichstromausführung, vorgesehen, mit einem Stator, der mehrere Statorpole aufweist, mit einem Ankerläufer, der mehrere Ankerzähne aufweist, die am Umfang des Ankerläufers mit dazwischen liegenden Läufernuten angeordnet sind, wobei jeweils auf einem Ankerzahn eine Wicklung, insbesondere eine Einzelzahnwicklung, vorgesehen ist, mit einem Kommutator, der mehrere Lamellen und zugeordnete Wicklungshaken aufweist, wobei die Wicklungen mit Wicklungshaken von Lamellen des Kommutators verbunden sind, wobei jeweils eine Anzahl von Lamellen durch Brücken zwischen Wicklungshaken der Lamellen auf der Ankerseite des Kommutators untereinander verbunden sind und wobei der Ankerläufer nach dem oben beschriebenen Verfahren hergestellt ist.

Mittels eines solchen Kommutatormotors mit einem Kommutator mit Wicklungshaken ist es nunmehr möglich, durch kürzere gestaltete Einzelhaken das Gewicht (insbesondere das hier benötige Kupfermaterial) und den Bauraum Kommutators und damit des Kommutatormotors gegenüber früheren Lösungen zu verringern, wobei gleichzeitig die geforderte Leistung und Drehzahl aufrecht erhalten bleiben kann. Eine geringere Anzahl von Drähten unter den Lamellen- bzw. Kommutatorhaken ergibt durch den so auch kürzeren Kommutator eine Teilpreisreduzierung.

Ein weiterer Vorteil besteht darin, dass nun ein Einsatz von Doppelflyerwicklungsvorrichtungen ermöglicht wird, wobei jeweils die Hälfte der Wicklungen aus einem durchgehenden Wicklungsdraht gebildet ist. So ergeben sich minimierte Taktzeiten aufgrund bezüglich des Zeitbedarfs und des Wicklungsaufwands optimierte Einhängevorgänge an den Lamellenhaken. Die Brückenwicklung ist an einer separaten Station taktzeitunabhängig realisierbar. Es ist aber auch möglich, den Kommutator z. B. von einem Zulieferer bewickeln zu lassen und nach dessen Montage die Wicklungen des Ankers selbst auszuführen. Die Brückenwicklung kann aber auch in der Fertigungslinie erstellt werden.

Die Bewicklung mit den so genannten Flyerwicklern weist auch den Vorteil auf, dass vorhandene Wickelvorrichtungen leicht umstellbar sind.

Der beschriebene Kommutatormotor ist bevorzugt für die Antriebseinrichtung einer Kraftfahrzeug-Antiblockierbremsvorrichtung geeignet. Denkbar sind aber auch andere Anwendungen bei anderen Antriebseinrichtungen.

Vorteilhafte Ausgestaltungen und Weiterbildungen der Erfindung ergeben sich aus den Unteransprüchen sowie aus der Beschreibung in Zusammenschau mit den Figuren der Zeichnung.

In einer bevorzugten Ausgestaltung sind zumindest jeweils zwei Lamellen durch eine Brücke miteinander verbunden.

Erfindungsgemäß sind jeweils die Hälfte der Anzahl der Wicklungen aus einem durchgehenden Wicklungsdraht gebildet. Dabei weisen z. B. zumindest zwei der Wicklungen einen zu den übrigen Wicklungen entgegen gesetzten Wicklungssinn auf.

Die Statorpole des Kommutatormotors sind bevorzugt als Permanentmagnete ausgebildet, wobei aber auch andere Techniken für Erregerpole benutzt werden können, wie zum Beispiel entsprechende Spulen.

In einer bevorzugten Ausgestaltung des erfindungsgemäßen Verfahrens wird das Wickeln der Wicklungen ausgeführt, nachdem der bewickelte Kommutator montiert worden ist. Vorzugsweise erfolgt dabei das Wickeln der Brücken des Kommutators an einen separaten Ort. Alternativ wäre auch denkbar, dass das Wickeln der Brücken und das Wickeln der Wicklungen in einer Fertigungslinie erfolgt. Dieses Wickeln der Brücken und das Wickeln der Wicklungen erfolgt dabei zum Beispiel beim montierten, unbewickelten Kommutator. Oder es erfolgt an einer separaten Maschine in der Fertigungslinie. Dies bedeutet vorteilhafterweise eine signifikante Zeitersparnis bei dem gesamten Wickelvorgang.

Vorzugsweise erfolgt das Wickeln der Brücken ohne zwischenzeitliches Abschneiden des Wicklungsdrahtes, d. h. in einem einzigen durchgehenden Prozessschritt. Vorzugsweise werden nach der Fertigstellung der gewickelten Brücken vorher festgelegte Drahtstellen getrennt.

In einer Ausgestaltung des erfindungsgemäßen Verfahrens werden beim Wickeln der Wicklungen Drahtanfang und Drahtende einer jeweiligen Wicklung an unterschiedlichen Kommutatorhaken angeschlossen.

Vorzugsweise erfolgt das Wickeln der Brücken und der Wicklungen mittels eines so genannten Flyers. Besonders bevorzugt ist es, wenn das Wickeln der Wicklungen mit einem so genannten Doppelflyer ausgeführt wird. Diese Flyer bzw. Doppelflyer sind maschinelle Einrichtungen, die aus der Textiltechnik heraus bekannt sind und welche geeignet sind, einen Draht eine entsprechende Bewegung, Richtung und Eigenrotation aufzuerlegen. Solche Flyer werden auch als Flügelspinnmaschinen bezeichnet.

Die Wicklungen werden bevorzugt als Einzelzahnwicklungen ausgeführt.

In einer alternativen Ausführung weist der Kommutator Brückenhaken und Wicklungshaken auf, die sich zum Beispiel gegenüberliegen. Dabei erfolgt das Wickeln der Brücken auf einer Brückenseite des Kommutators durch Verbinden von Brückenhaken der Lamellen des Kommutators und das Wickeln der Wicklungen von Ankerzähnen und Anschließen der jeweiligen Wicklungsenden an Wicklungshaken der Lamellen auf einer Ankerseite des Kommutators, welche der Brückenseite gegenüberliegt.

Ein entsprechender Kommutatormotor weist einen solchen Kommutator mit mehreren Lamellen und zugeordneten Brückenhaken und Wicklungshaken auf. Dabei sind die Wicklungen mit Wicklungshaken der Lamellen auf einer Ankerseite des Kommutators verbunden, wobei jeweils eine Anzahl von Lamellen durch Brücken zwischen Brückenhaken der Lamellen auf einer der Ankerseite gegenüberliegenden Brückenseite des Kommutators untereinander verbunden sind und wobei der Ankerläufer nach dem oben beschriebenen, alternativen Verfahren hergestellt ist.

Die obigen Ausgestaltungen und Weiterbildungen der Erfindung lassen sich auf beliebige Art und Weise miteinander kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Draufsicht auf einen erfindungsgemäßen Kommutatormotor zur Darstellung eines bevorzugten Ausführungsbeispiels;
- Fig. 2: ein bevorzugtes Wickelschema des erfindungsgemäßen Kommutatormotors aus Fig. 1;
- Fig. 3: das Wickelschema aus Fig. 2 für einen Kommutator in einer für ein maschinelles Wicklungsverfahren dargestellten Ausführung; und
- Fig. 4: das Wickelschema aus den Fig. 2 und 3 in einer für ein maschinelles Wicklungsverfahren dargestellten Ausführung.

In den Figuren der Zeichnung sind gleiche und funktionsgleiche Elemente und Merkmale - sofern nichts Anderes ausgeführt ist - mit denselben Bezugszeichen versehen.

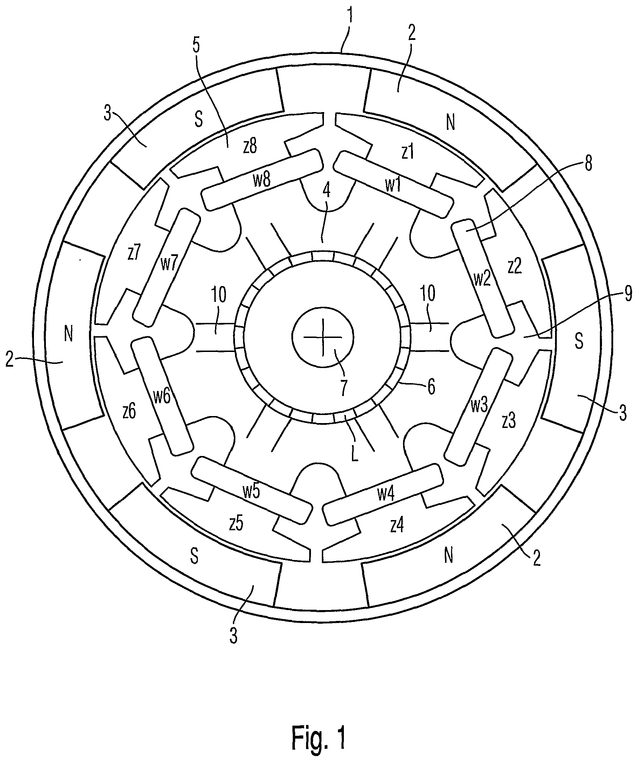

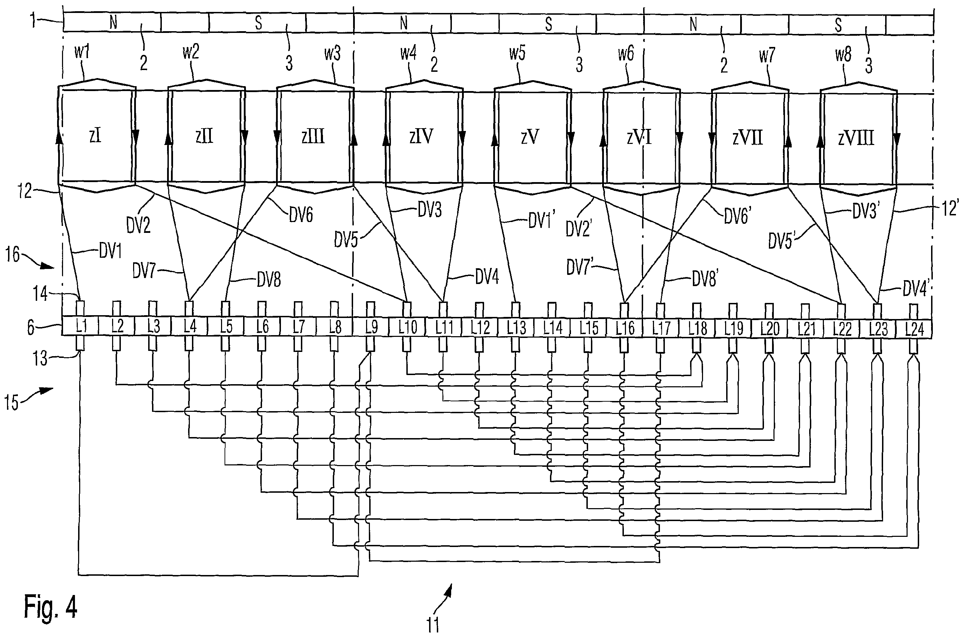

Der Grundaufbau eines erfindungsgemäßen Kommutatormotors wird nachfolgend mit Bezugnahme auf Fig. 1 erläutert. Fig. 1 zeigt eine schematische Draufsicht auf einen solchen Kommutatormotor. In einem mit Bezugszeichen 1 bezeichneten Stator sind Statorpole 2, 3, hier als Permanentmagneten mit Nord- und Südpolen N, S ausgebildet, um einen Ankerläufer 4 herum angeordnet. Der Ankerläufer 4 ist auf einer Ankerwelle 7 drehfest aufgebracht und besitzt eine Vielzahl von Ankerzähnen 5, die untereinander durch Läufernuten 9 beabstandet sind. Um die Ankerzähne 5 herum und in den Läufernuten 9 sind Wicklungen 8 vorgesehen, deren Enden mit Lamellen L über Wicklungshaken 14 (siehe Fig. 4) eines Kommutators 6 verbunden sind. Zur Bestromung des Kommutators 6 sind zwei oder auch mehr Bürsten 10 vorgesehen.

Dieser Kommutatormotor kann z. B. in Gleichstromausführung besonders für den Einsatz in einer AntiblockierBremsvorrichtung eines Kraftfahrzeugs ausgebildet sein, die eine exakte Drehzahlerkennung erforderlich macht. Zum Beispiel liegt eine Leerlaufdrehzahl dieses Kommutatormotors im Bereich 4500min⁻¹.

In diesem bevorzugten Ausführungsbeispiel weist der Kommutatormotor einen Stator 1 mit sechs Polen 2, 3, vorzugsweise Permanentmagneten N, S, auf. Der Ankerläufer 4 besitzt acht Ankerzähne 5 mit jeweils einer Wicklung 8, insbesondere Einzelzahnwicklung. Der Kommutator 6 weist vierundzwanzig Lamellen L1...L24 auf.

Hierbei ist die Zahl (vierundzwanzig) der Lamellen L ein Vielfaches der Polpaarzahl (drei) der Statorpole 2, 3 und auch ein Vielfaches der Anzahl der Statorpole 2, 3 (sechs). Ebenfalls ist die Zahl vierundzwanzig ein Vielfaches der Ankerzähne 5 (acht). Dieses sind nur beispielhafte Angaben, selbstverständlich können auch andere Ausführungen zur Anwendung kommen.

Die Ankerzähne 5 sind jeweils mit zl...z8 und die zugehörigen Wicklungen 8 jeweils mit wl...w8 bezeichnet.

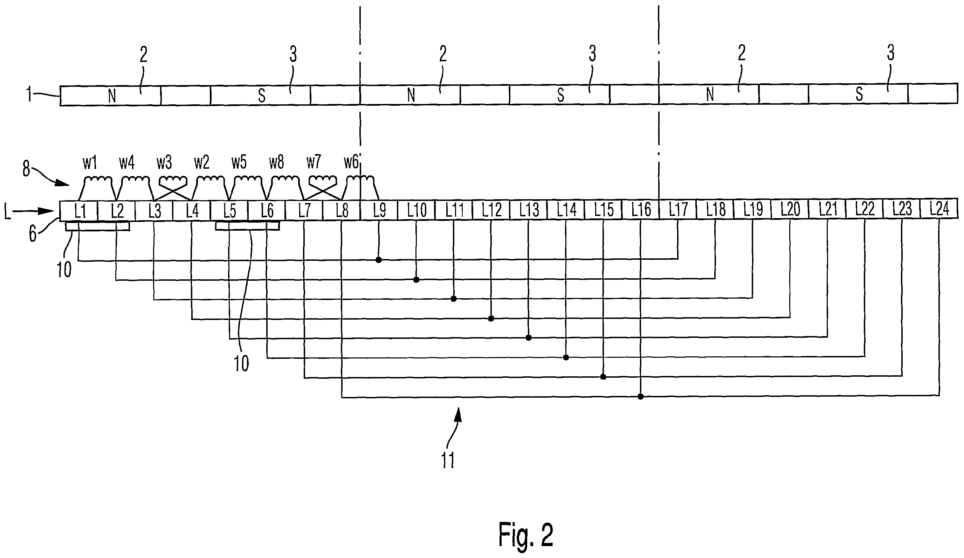

Fig. 2 ist ein bevorzugtes Wickelschema des erfindungsgemäßen Kommutatormotors aus Fig. 2 mit Verbindungen der Enden der Wicklungen 8 mit den Lamellen L. In Fig. 2 sind Stator 1 mit den Statorpolen 2, 3 und die Lamellen L in abgewickelter Darstellung gezeigt. Hierbei sind die Einzellamellen mit L1...L24 bezeichnet. Die beiden Bürsten 10 sind hier schematisch dargestellt.

Das erste Ende der Wicklung w1 ist mit der Lamelle L1 verbunden, wobei das zweite Ende der Wicklung w1 mit der Lamelle L2 verbunden ist. An der Lamelle L2 ist das erste Ende der Wicklung w4 angeschlossen, deren zweites Ende mit dem zweiten Ende von Wicklung w3 an Lamelle L3 liegt. Das erste Ende von Wicklung w3 ist mit dem ersten Ende von Wicklung w2 an Lamelle L4 verbunden. Das andere Ende von Wicklung w2 ist zusammen mit dem ersten Ende von Wicklung w5 an Lamelle L5 angeschlossen, wobei das zweite Ende von Wicklung w5 und das erste Ende von Wicklung w8 an Lamelle L6 liegen. Das zweite Ende von Wicklung w8 ist mit dem zweiten Ende der Wicklung w7 an Lamelle L7 angeschlossen. Das erste Ende von Wicklung w7 und das erste Ende von Wicklung w6 sind zusammen mit Lamelle L8 verbunden. Schließlich ist das zweite Ende von Wicklung w6 an Lamelle L9 angeschlossen.

Die Wicklungen w3 und w7 weisen einen entgegengesetzten Wicklungssinn zu den übrigen Wicklungen wl...w2, w4...w6 und w8 auf.

In dem in Fig. 2 gezeigten Beispiel sind jeweils drei Lamellen über jeweilige Brücken 11 miteinander verbunden. Es handelt sich dabei jeweils um die folgenden Lamellengruppen enthaltend jeweils drei Lamellen:
L1-L9-L17;
L2-L10-L18;
L3-L11-L19;
L4-L12-L20;
L5-L13-L21;
L6-L14-L22;
L7-L15-L23;
L8-L16-L24.

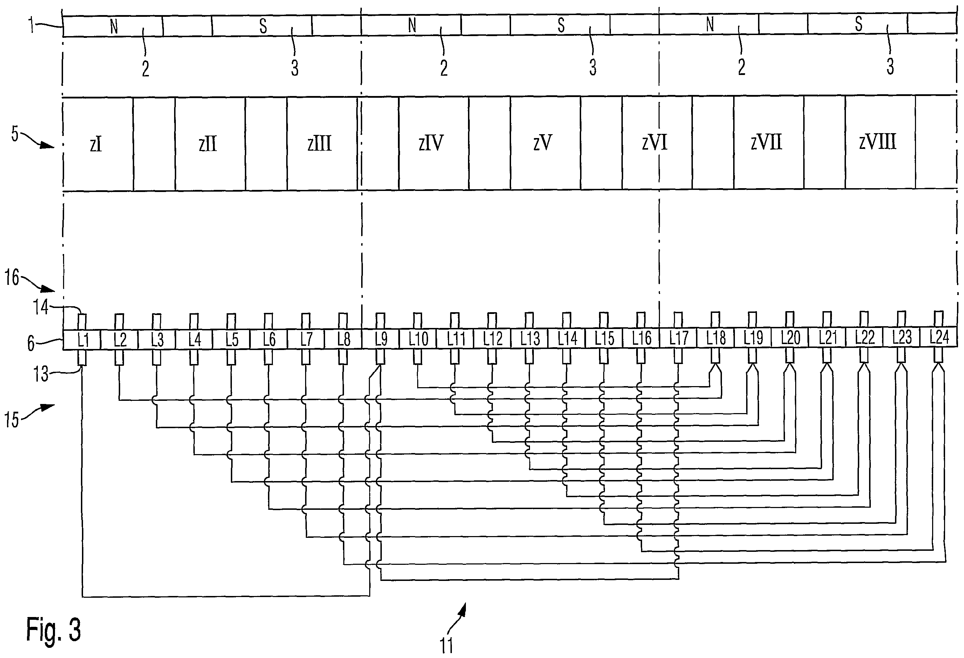

Das Wickelschema aus Fig. 2 ist in Fig. 3 und 4 in einer Ausführung für maschinelle Wicklungen illustriert. Hierbei sind die Ankerzähne 5 mit ihren Bezeichnungen z1...z8 und die Wicklungen 8 mit ihren Bezeichnungen wl...w8 zusammen gezeigt.

Zur Herstellung der Wicklungen 8 des Ankerläufers 4 und der Brücken 11 des Kommutators 6 ist ein erfindungsgemäßes Verfahren vorgesehen, bei welchem der Kommutator 6 zunächst mit den Brücken 11 bewickelt wird. Diese Brückenbewicklung erfolgt (siehe Fig. 3 und 4) unter Herstellen der Brücken 11 als Verbindungen von Wicklungshaken 14, die als Brückenhaken 13 der Lamellen L vorgesehen sind. Die Brückenhaken 13 sind in einer Ausführung Wicklungshaken 14 (siehe Fig. 4) zum Anschluss der Wicklungen w1 bis w8 der Ankerzähne 5 vorgesehen (siehe Fig. 3 und 4). Die Wicklungen w1 bis w8 werden separat von den Brücken 11 in einem weiteren Verfahrensschritt hergestellt.

Fig. 3 illustriert zunächst das Wickelschema aus Fig. 2 für den Kommutator 6 in einer für ein maschinelles Wicklungsverfahren dargestellten Ausführung. Die Brücken 11 werden nach dem gemäß Fig. 2 angegebenen Schema durch Verbinden der jeweiligen Brückenhaken 13 erstellt.

Es ist in einer alternativen Ausführung auch möglich, dass der Kommutator 6 Lamellen L mit sich gegenüberliegenden Lamellenhaken, nämlich Brückenhaken 13 auf einer den Ankerzähnen 5 abgewandten Brückenseite 15 und Wicklungshaken 14 auf einer den Ankerzähnen 5 zugewandten Ankerseite 16, ausgebildet ist. Diese Ausführung kann aus Fig. 3 und 4 ebenfalls ersehen werden, wenn die Darstellung nicht nur als Verdrahtung auf der Ankerseite 16, sondern auf zwei gegenüberliegenden Seiten betrachtet wird.

Zum Einsatz bei der Bewicklung der Brücken 11 kommt zum Beispiel ein Flyerwickler, welcher in einer Aufnahme ohne zwischenzeitliches Abschneiden die Brückenbewicklung durchführt. Anschließend werden vorher festgelegte Drahtstellen getrennt. Durch diese separate Wicklung kann der Kommutator 6 schon beim Lieferanten auf diese Weise vorkonfektioniert werden. Es ist auch möglich, dass er in der Herstellungsstraße an einem separaten Wickler erstellt wird. Aber auch eine Bewicklung eines schon montierten Kommutators 6 auf der Ankerwelle 7 ist als erster Verfahrensschritt möglich, dem dann das Wickeln der Wicklungen w1 bis w8 folgt. Wichtig dabei ist auf jeden Fall, dass das Bewickeln der Brücken 11 und das Wickeln der Wicklungen w1 bis w8 jeweils separat erfolgt.

Fig. 4 zeigt das Wickelschema aus Fig. 2 und 3 in einer für ein maschinelles Wicklungsverfahren dargestellten Ausführung.

Nachdem der vorgefertigte Kommutator 6 mit den Brückenwicklungen 11 auf der Ankerwelle 7 befestigt ist, werden die Wicklungen w1 bis w8 orientiert zum Kommutator 6 in den Ankerläufer 4 gewickelt, so dass bei einer Einzeldrahtwicklung inklusive Brückenwicklung maximal zwei Drähte unter einem Haken 13, 14 angeordnet sind. Dies ist möglich, da Drahtanfang und Drahtende nicht in einem Haken zusammenkommen, sondern auf zwei Haken verteilt sind und über die zugehörige Brücke verbunden sind, zum Beispiel liegt bei Wicklung w1 der Drahtanfang auf dem Wicklungshaken 14 der Lamelle L1 und das Drahtende auf dem Wicklungshaken 14 der Lamelle L10, wobei die zugehörigen Brücken L1-L9-L17 und L10-L18-L2 mit ihrem jeweiligen Drahtanfang auf L1 bzw. L10 angeordnet sind, wobei hier maximal zwei Drähte auf einem Lamellenhaken liegen. Dadurch können sowohl Brückenhaken 13 als auch Wicklungshaken 14 kürzer ausgeführt werden. In der ersten Ausführung mit den Brücken 11 auf der Ankerseite 16 sind die Wicklungshaken 14 der Lamellen L1, L4, L5, L10, L11, L13, L16, L17, L22 und L23 auch Brückenhaken 13, welche jeweils zwei Drähte aufnehmen. Alle anderen Wicklungshaken 14 sind hierbei nur Brückenhaken 13 mit jeweils einem Draht.

Es werden in diesem Beispiel mit einer Doppelflyerwickelvorrichtung jeweils zwei Wicklungen gleichzeitig gewickelt:
w1 und w5
w2 und w6
w3 und w7
w4 und w8

Dabei ergeben sich folgende Drahtverläufe DV1 bis DV8 eines Wicklungsdrahts 12:
Drahtverlauf DV1 als Drahtanfang von L1 (zugleich mit Drahtanfang der Brücke 11 von L1 nach L9) über Wicklung w1 als DV2 zur Lamelle L10 mit zwei Drähten unter dem Haken, dann weiter als DV3 zu Wicklung w4 und DV4 zur Lamelle L11, von dort als DV5 zur Wicklung w3 und als DV6 zur Lamelle L4. Von hier verläuft der Drahtverlauf als DV7 zur Wicklung w2 und als DV8 als Drahtende zur Lamelle L5. Die Wicklung w3 weist einen zu den Wicklungen w1, w2 und w4 entgegengesetzten Wicklungssinn auf.

Gleichzeitig erfolgen die Drahtverläufe DV1' bis DV8' durch den Doppelflyer für die Wicklungen w5 bis w8 in ähnlicher Weise als Wicklungsdraht 12':
Drahtverlauf DV1' als Drahtanfang von L13 über Wicklung w5 als DV2' zur Lamelle L22, dann weiter als DV3' zu Wicklung w8 und DV4' zur Lamelle L23, von dort als DV5' zur Wicklung w7 im umgekehrten Wicklungssinn zu den Wicklungen w5, w6 und w8 und als DV6' zur Lamelle L16, weiter als Drahtverlauf DV7' zur Wicklung w6 und als DV8' als Drahtende zur Lamelle L17.

Obgleich die vorliegende Erfindung vorstehend anhand eines bevorzugten Ausführungsbeispiels erläutert wurde, sei sie nicht darauf beschränkt, sondern lässt sich auf beliebige Art und Weise modifizieren, ohne vom Gegenstand der vorliegenden Erfindung wie in den Ansprüchen definiert abzuweichen.

Insbesondere wäre auch denkbar, wenn z.B. jeweils andere Lamellen als die gezeigten über entsprechende Brücken miteinander verbunden sind.

Auch die Anwendung des erfindungsgemäßen Kommutatormotors für eine Antriebsvorrichtung in einem Kraftfahrzeug und hier insbesondere für ein Antiblockierbremssystem eines Kraftfahrzeuges sei lediglich beispielhaft zu verstehen. Die Erfindung lässt sich vielmehr bei beliebigen elektrischen Antrieben vorteilhaft einsetzen.

Ein gleichzeitiges Wickeln der Wicklungen und der Brückenwicklungen wäre auch denkbar, wenn zum Beispiel in der zweiten Ausführung bei montiertem, noch nicht bewickeltem Kommutator 6 mit Lamellen L mit zwei gegenüberliegenden Haken 13 und 14 die Brückenwicklungen 11 von der Brückenseite 15 und die Wicklungen 8 von der Ankerseite 16 her gewickelt werden..

Die vorstehend genannten Zahlenangaben sind zwar bevorzugt und bisweilen einer konkreten Anwendung entnommen, jedoch können diese, entsprechend dem fachmännischen Handeln und Wissen, auch mehr oder weniger variiert werden.

### Bezugszeichenliste

- 1: Stator
- 2, 3: Statorpol
- 4: Ankerläufer
- 5: Ankerzahn
- 6: Kommutator
- 7: Ankerwelle
- 8: Wicklung
- 9: Läufernut
- 10: Bürste
- 11: Brücken
- 12, 12': Wicklungsdraht
- 13: Brückenhaken
- 14: Wicklungshaken
- 15: Brückenseite
- 16: Ankerseite
- DV1...8, DV1'...8': Drahtverlauf
- L: Lamelle
- N: Nordpol
- S: Südpol
- w1...8: Wicklung
- zI...VIII: Zahn

## Patentansprüche

1. Verfahren zum Herstellen eines Ankerläufers (4) eines Kommutatormotors, insbesondere in Gleichstromausführung, wobei der Kommutatormotor aufweist: einen Stator (1) mit mehreren Statorpole (2, 3), einen Ankerläufer (4) mit mehreren Ankerzähnen (5), die am Umfang des Ankerläufers (4) mit dazwischen liegenden Läufernuten (9) angeordnet sind, und einen Kommutator (6), der mehrere Lamellen (L) und zugeordnete Wicklungshaken (14) aufweist,
mit den Schritten:
Wickeln von Brücken (11) des Kommutators (6) durch Verbinden von Wicklungshaken (14) der Lamellen (L) des Kommutators (6) ;
Wickeln von Wicklungen (8) von Ankerzähnen (5), wobei jeweils die Hälfte der Anzahl der Wicklungen (8) aus einem durchgehenden Wicklungsdraht (12, 12') gebildet sind;
und
Anschließen der jeweiligen Wicklungsenden an Wicklungshaken (14) der Lamellen (L) des Kommutators (6).

2. Verfahren nach Anspruch 1,
**dadurch gekennzeichnet,**
**dass** das Wickeln der Wicklungen (8) ausgeführt wird, nachdem der mit den Brücken bewickelte Kommutator (6) montiert worden ist.

3. Verfahren nach Anspruch 1,
**dadurch gekennzeichnet,**
**dass** das Wickeln der Brücken (11) und das Wickeln der Wicklungen (8) bei montiertem, unbewickeltem Kommutator (6) erfolgen.

4. Verfahren nach einem der vorhergehenden Ansprüche,
**dadurch gekennzeichnet,**
**dass** das Wickeln der Brücken (11) ohne zwischenzeitliches Abschneiden in einem einzigen durchgehenden Prozessschritt erfolgt und dass nach der Fertigwicklung der Brücken (11) vorher festgelegte Drahtstellen getrennt werden.

5. Verfahren nach einem der vorhergehenden Ansprüche,
**dadurch gekennzeichnet,**
**dass** beim Wickeln der Wicklungen (8) Drahtanfang und Drahtende einer jeweiligen Wicklung (8) an unterschiedliche Wicklungshaken (14) angeschlossen werden.

6. Verfahren nach einem der vorhergehenden Ansprüche,
**dadurch gekennzeichnet,**
**dass** das Wickeln der Brücken (11) und der Wicklungen (8) mittels eines Flyers erfolgt.

7. Verfahren nach Anspruch 6,
**dadurch gekennzeichnet,**
**dass** das Wickeln der Wicklungen (8) mit einem Doppelflyer ausgeführt wird.

8. Verfahren nach einem der vorhergehenden Ansprüche,
**dadurch gekennzeichnet,**
**dass** die Wicklungen (8) als Einzelzahnwicklungen ausgeführt werden.

9. Verfahren nach einem der vorhergehenden Ansprüche, wobei der Kommutator (6) Brückenhaken (13) und Wicklungshaken (14) aufweist,
wobei das Wickeln der Brücken (11) auf einer Brückenseite (15) des Kommutators (6) durch Verbinden von Brückenhaken (13) der Lamellen (L) des Kommutators (6) erfolgt und wobei das Wickeln der Wicklungen (8) von Ankerzähnen (5) und das Anschließen der jeweiligen Wicklungsenden an Wicklungshaken (14) der Lamellen (L) auf einer Ankerseite (16) des Kommutators (6) erfolgt.

10. Kommutatormotor, insbesondere in Gleichstromausführung, mit einem Stator (1), der mehrere Statorpole (2, 3) aufweist,
mit einem Ankerläufer (4), der mehrere Ankerzähne (5) aufweist, die am Umfang des Ankerläufers (4) mit dazwischen liegenden Läufernuten (9) angeordnet sind, wobei jeweils auf einem Ankerzahn (5) eine Wicklung (8) vorgesehen ist, wobei jeweils die Hälfte der Anzahl der Wicklungen (8) aus einem durchgehenden Wicklungsdraht (12, 12') gebildet sind,
mit einem Kommutator (6), der mehrere Lamellen (L) und zugeordnete Wicklungshaken (14) aufweist,
- wobei die Wicklungen (8) mit Wicklungshaken (14) der Lamellen (L) auf einer Ankerseite (16) des Kommutators (6) verbunden sind,
- wobei jeweils eine Anzahl von Lamellen (L) durch Brücken (11) zwischen Wicklungshaken (14) der Lamellen (L) der Ankerseite (16) des Kommutators (6) untereinander verbunden sind, und
- wobei der Ankerläufer (4) nach einem Verfahren gemäß den Ansprüchen 1 bis 9 hergestellt ist.

11. Kommutatormotor nach Anspruch 10,
**dadurch gekennzeichnet,**
**dass** zumindest jeweils zwei Lamellen (L) durch eine Brücke (11) miteinander verbunden sind.

12. Kommutatormotor nach einem der Ansprüche 10 bis 11,
**dadurch gekennzeichnet,**
**dass** jeweils auf einem Ankerzahn (5) eine Einzelzahnwicklung (8) vorgesehen ist.

13. Kommutatormotor nach einem der Ansprüche 10 bis 12,
**dadurch gekennzeichnet,**
**dass** zumindest zwei der Wicklungen (8) einen zu den übrigen Wicklungen (8) entgegengesetzten Wicklungssinn aufweisen.

14. Kommutatormotor nach einem der Ansprüche 10 bis 14
**dadurch gekennzeichnet,**
**dass** die Statorpole (2, 3) als Permanentmagneten ausgebildet sind.

15. Antiblockierbremsvorrichtung eines Kraftfahrzeuges, welches einen Kommutatormotor nach einem der Ansprüche 10 bis 14 aufweist.

## Claims

1. Method for manufacturing an armature (4) of a commutator motor, in particular in a DC configuration, the commutator motor having: a stator (1) comprising a plurality of stator poles (2, 3), an armature (4) comprising a plurality of armature teeth (5) which are arranged on the periphery of the armature (4) with armature grooves (9) positioned between them, and a commutator (6) which has a plurality of lamellae (L) and associated winding hooks (14),
comprising the steps of:
winding bridges (11) of the commutator (6) by connecting winding hooks (14) of the lamellae (L) of the commutator (6) ;
winding windings (8) of armature teeth (5), each half of the number of windings (8) being formed from one continuous winding wire (12, 12');
and
attaching the associated winding ends to winding hooks (14) of the lamellae (L) of the commutator (6).

2. Method according to claim 1,
**characterised**
**in that** the windings (8) are wound after the commutator (6) enwrapped with the bridges has been mounted.

3. Method according to claim 1,
**characterised**
**in that** the bridges (11) are wound, and the windings (8) are wound, when the commutator (6) is mounted and not enwrapped.

4. Method according to any of the preceding claims,
**characterised**
**in that** the bridges (11) are wound without intermediate trimming in a single continuous process step, and in that after the bridges (11) are fully wound predetermined wire locations are cut.

5. Method according to any of the preceding claims,
**characterised**
**in that** when the windings (8) are wound the wire start and wire end of each winding (8) are attached to different winding hooks (14).

6. Method according to any of the preceding claims,
**characterised**
**in that** the bridges (11) and the windings (8) are wound by means of a flyer.

7. Method according to claim 6,
**characterised**
**in that** the windings (8) are wound using a double flyer.

8. Method according to any of the preceding claims,
**characterised**
**in that** the windings (8) are configured as single-tooth windings.

9. Method according to any of the preceding claims, the commutator (6) having bridge hooks (13) and windings hooks (14),
wherein the bridges (11) are wound on a bridge side (15) of the commutator (6) by connecting bridge hooks (13) of the lamellae (L) of the commutator (6), and wherein the windings (8) of armature teeth (5) are wound, and the associated winding ends are attached to winding hooks (14) of the lamellae (L), on an armature side (16) of the commutator (6) .

10. Commutator motor, in particular in a DC configuration, comprising a stator (1) which has a plurality of stator poles (2, 3),
comprising an armature (4) which has a plurality of armature teeth (5) which are arranged on the periphery of the armature (4) with armature grooves (9) positioned between them, a winding (8) being provided on each armature tooth (5), each half of the number of windings (8) being formed from one continuous winding wire (12, 12') comprising a commutator (6) which has a plurality of lamellae (L) and associated winding hooks (14),
wherein the windings (8) are connected to an armature side (16) of the commutator (6) using winding hooks (14) of the lamellae (L),
wherein in each case a number of lamellae (L) are interconnected by bridges (11) between windings hooks (14) of the lamellae (L) of the armature side (16) of the commutator (6), and
wherein the armature (4) is manufactured by a method according to claims 1 to 9.

11. Commutator according to claim 10,
**characterised**
**in that** at least two lamellae (L) in each case are interconnected by a bridge (11).

12. Commutator motor according to any of claims 10 to 11,
**characterised**
**in that** a single-tooth winding (8) is provided on each armature tooth (5).

13. Commutator motor according to any of claims 1 to 12,
**characterised**
**in that** at least two of the windings (8) have a winding direction counter to the remaining windings (8).

14. Commutator motor according to any of claims 10 to 14,
**characterised**
**in that** the stator poles (2, 3) are formed as permanent magnets.

15. Anti-lock braking system of a motor vehicle which has a commutator motor according to any of claims 10 to 14.

## Revendications

1. Procédé pour produire un rotor (4) d'un moteur commutateur, en particulier pour une conception à courant continu, dans lequel le moteur commutateur comporte : un stator (1) doté de plusieurs pôles de stator (2, 3), un rotor (4) doté de plusieurs dents d'armature (5), lesquelles sont agencées sur le pourtour du rotor (4) avec des rainures de rotor (9) situées entre celles-ci, et d'un commutateur (6), lequel comporte plusieurs disques (L) et des crochets de bobinage (14) associés, avec les étapes :
enroulement de ponts (11) du commutateur (6) par raccordements des crochets de bobinage (14) des disques (L) du commutateur (6) ;
enroulement de bobinages (8) de dents d'armature (5), dans lequel respectivement la moitié du nombre des bobinages (8) sont formés à partir d'un fil de bobinage (12, 12') continu ; et
connexion des extrémités de bobinage respectives aux crochets de bobinage (14) des disques (L) du commutateur (6) .

2. Procédé selon la revendication 1,
**caractérisé en ce**
**que** l'enroulement des bobinages (8) est réalisé après que le commutateur (6) enroulé avec les ponts a été monté.

3. Procédé selon la revendication 1,
**caractérisé en ce**
**que** l'enroulement des ponts (11) et l'enroulement des bobinages (8) s'effectuent lorsque le commutateur (6) est monté et non-enroulé.

4. Procédé selon l'une des revendications précédentes,
**caractérisé en ce**
**que** l'enroulement des ponts (11) s'effectue sans coupe intermédiaire en une unique étape de procédé continue et en ce qu'après la finition de l'enroulement des ponts (11), des positions de fil précédemment fixées sont séparées.

5. Procédé selon l'une des revendications précédentes,
**caractérisé en ce**
**que** lors de l'enroulement des bobinages (8), le début de fil et la fin de fil d'un bobinage (8) respectif sont connectées à différents crochets de bobinage (14).

6. Procédé selon l'une des revendications précédentes,
**caractérisé en ce**
**que** l'enroulement des ponts (11) et des bobinages (8) s'effectue au moyen d'une ailette.

7. Procédé selon la revendication 6,
**caractérisé en ce**
**que** l'enroulement des bobinages (8) est réalisé avec une double ailette.

8. Procédé selon l'une des revendications précédentes,
**caractérisé en ce**
**que** les bobinages (8) sont réalisés comme bobinages à dent unique.

9. Procédé selon l'une des revendications précédentes, dans lequel le commutateur (6) comporte des crochets de pont (13) et des crochets de bobinage (14),
dans lequel l'enroulement des ponts (11) s'effectue sur un côté de pont (15) du commutateur (6) par raccordement de crochets de pont (13) des disques (L) du commutateur (6) et dans lequel l'enroulement des bobinages (8) de dents d'armature (5) et le raccordement des extrémités de bobinage respectives à des crochets de bobinage (14) des disques (L) s'effectuent sur un côté d'armature (16) du commutateur (6).

10. Moteur commutateur, en particulier à conception à courant continu,
doté d'un stator (1), lequel comporte plusieurs pôles de stator (2, 3),
doté d'un rotor (4), lequel comporte plusieurs dents d'armature (5), lesquelles sont agencées sur le pourtour du rotor (4) avec des rainures de rotor (9) situées entre celles-ci, dans lequel un enroulement (8) est prévu respectivement sur une dent d'armature (5), dans lequel respectivement la moitié du nombre des bobinages (8) sont formés à partir d'un fil de bobinage (12, 12') continu,
doté d'un commutateur (6), lequel comporte plusieurs disques (L) et des crochets de bobinage (14) associés,
- dans lequel les enroulements (8) sont raccordés à des crochets de bobinage (14) des disques (L) sur un côté d'armature (16) du commutateur (6),
- dans lequel un nombre de disques (L) sont respectivement reliés les uns aux autres par des ponts (11) entre les crochets de bobinage (14) des disques du côté d'armature (16) du commutateur (6), et
- dans lequel le rotor (4) est produit selon un procédé d'après les revendications 1 à 9.

11. Moteur commutateur selon la revendication 10,
**caractérisé en ce**
**qu'**au moins deux disques (L) sont respectivement raccordés l'un à l'autre par un pont (11).

12. Moteur commutateur selon l'une des revendications 10 à 11,
**caractérisé en ce**
**qu'**un bobinage à dent unique (8) est respectivement prévu sur une dent d'armature (5).

13. Moteur commutateur selon l'une des revendications 10 à 12,
**caractérisé en ce**
**qu'**au moins deux des bobinages (8) comportent un sens d'enroulement opposé aux autres bobinages (8).

14. Moteur commutateur selon l'une des revendications 10 à 14,
**caractérisé en ce**
**que** les pôles de stator (2, 3) sont réalisés comme aimants permanents.

15. Dispositif de frein antiblocage d'un véhicule à moteur, lequel comporte un moteur commutateur selon l'une des revendications 10 à 14.
